(19) Europäisches Patentamt
European Patent Office
Office européen des brevets

(11) **EP 3 599 501 B1**

# (12) FASCICULE DE BREVET EUROPEEN

(45) Date de publication et mention de la délivrance du brevet:
**20.10.2021 Bulletin 2021/42**

(51) Int Cl.:
**G02F 1/015** (2006.01)   **G02F 1/025** (2006.01)
**H04B 10/50** (2013.01)

(21) Numéro de dépôt: **19186973.4**

(22) Date de dépôt: **18.07.2019**

(54) **MODULATEUR-COMMUTATEUR ATHERMIQUE À DEUX ANNEAUX SUPERPOSÉS**

ATHERMISCHER MODULATOR-UMSCHALTER MIT ZWEI ÜBEREINANDER ANGEORDNETEN RINGEN

HEAT-ABSORBING MODULATOR-SWITCH WITH TWO STACKED RINGS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.07.2018 FR 1856931**

(43) Date de publication de la demande:
**29.01.2020 Bulletin 2020/05**

(73) Titulaire: **Commissariat à l'énergie atomique et aux énergies alternatives**
**75015 Paris (FR)**

(72) Inventeurs:
• **WILMART, Quentin**
  **38054 GRENOBLE Cedex 09 (FR)**
• **HASSAN, Karim**
  **38054 GRENOBLE Cedex 09 (FR)**
• **MYKO, André**
  **38054 GRENOBLE Cedex 09 (FR)**

(74) Mandataire: **Brevalex**
**95, rue d'Amsterdam**
**75378 Paris Cedex 8 (FR)**

(56) Documents cités:
**US-A1- 2009 274 187    US-A1- 2014 321 848**

• **MOHAMMAD SOLTANI ET AL: "Enabling arbitrary wavelength frequency combs on chip : Enabling arbitrary wavelength frequency combs on chip", LASER & PHOTONICS REVIEWS, vol. 10, no. 1, 1 janvier 2016 (2016-01-01), pages 158-162, XP055440273, DE ISSN: 1863-8880, DOI: 10.1002/lpor.201500226**
• **PADMARAJU K ET AL: "Integrated thermal stabilization of a microring modulator", OPTICAL FIBER COMMUNICATION CONFERENCE AND EXPOSITION AND THE NATIONAL FIBER OPTIC ENGINEERS CONFERENCE (OFC/NFOEC), 2013, IEEE, 17 mars 2013 (2013-03-17), pages 1-3, XP032678941, ISBN: 978-1-4799-0457-0 [extrait le 2013-06-14]**
• **BISWAJEET GUHA ET AL: "Athermal silicon microring resonators with titanium oxide cladding", OPTICS EXPRESS, vol. 21, no. 22, 28 octobre 2013 (2013-10-28), page 26557, XP055207093, DOI: 10.1364/OE.21.026557**

**Description**

**DOMAINE TECHNIQUE**

Le domaine de l'invention est celui des dispositifs optiques utilisés dans les circuits photoniques et optoélectroniques. L'invention concerne plus particulièrement un dispositif de type anneau résonnant utilisé pour moduler ou commuter un signal optique.

**ÉTAT DE LA TECHNIQUE ANTÉRIEURE**

Les dispositifs qui réalisent les fonctions de modulation et de commutation sont fondamentalement requis dans tout système de communication optique. Un modulateur optique assure la tâche d'imprimer sur un signal lumineux des informations portées par un signal électrique. Il vient ainsi encoder une information initialement de type électronique sous forme optique. Un commutateur optique, ou routeur, est quant à lui un dispositif qui permet de détourner un signal optique d'entrée vers l'un d'une pluralité de ports de sortie possibles. Il vient ainsi router un signal en fonction de sa destination prévue.

Les modulateurs et les commutateurs sont commandés par un signal électrique. Dans le cas du modulateur, une forme d'onde du signal électrique doit être reproduite sur le signal d'entrée optique pour produire un signal de sortie optique modulé. Dans le cas du commutateur de routage, le signal électrique est utilisé en tant que ligne de commande pour établir le chemin souhaité entre le port d'entrée et l'un des ports de sortie.

Certains dispositifs peuvent assurer ces deux fonctions. C'est le cas par exemple de l'interféromètre de Mach Zehnder ou des dispositifs à base d'anneau résonnant. Dans les circuits photoniques, ce sont généralement les interféromètres de Mach Zehnder qui sont préférés. La raison principale réside dans le fait que le fonctionnement des anneaux est beaucoup plus sensible à des défauts de fabrication ou à des variations de température.

Si les interféromètres de Mach Zehnder sont donc généralement plus fiables, ils présentent l'inconvénient d'être beaucoup moins compacts que les anneaux résonnants. Or la compacité est un paramètre très important puisque la bande passante électrique radiofréquence est fortement impactée par la longueur des électrodes d'accès. Et s'il existe des solutions pour adapter les électrodes d'accès et continuer à augmenter la fréquence, ces solutions complexifient l'électronique de commande et ne sont donc pas envisageables dans le cas d'un réseau dense de commutateurs, par exemple un réseau optique sur puce. On cherche donc à substituer des anneaux résonnants stables thermiquement aux interféromètres de Mach Zehnder.

Une première solution pour améliorer la stabilité thermique d'un anneau résonnant consiste à le rendre athermique de manière active. L'article de Padmaraju et al., Integrated thermal stabilization of a microring modulator, Opt. Exp 2013, expose ainsi de venir re-diriger une partie du signal de sortie vers une photodiode où la variation de puissance optique est utilisée pour appliquer une contre-réaction sur l'anneau via une chaufferette et ainsi stabiliser la longueur d'onde de résonnance de l'anneau. Cette solution est efficace mais consommatrice d'énergie et plus complexe qu'une solution passive (nécessité d'une photodiode dans le circuit photonique et d'une boucle de rétroaction dans l'électronique de commande).

Une autre solution dite passive consiste à rendre l'anneau résonnant athermique sans système actif de rétroaction. On peut par exemple utiliser un matériau à indice thermo-optique négatif en tant que matériau de gaine des guides d'onde. Guha et al., Athermal silicon microring resonators with titanium oxide cladding, Opt. Exp. 2013 rapporte ainsi un abaissement de la sensibilité thermique de 0.1nm/K à 0.03nm/K en ayant recours à une gaine en $TiO_2$ qui présente un décalage d'indice sous l'effet de la température opposé à celui du Si et vient donc le compenser. Mais cette solution passive nécessite l'introduction d'un matériau supplémentaire dans le processus de fabrication et engendre des pertes optiques importantes.

US 2014/0321848 A1 divulgue un modulateur qui dans un mode de réalisation comporte deux ou trois anneaux juxtaposés dans un même plan.

**EXPOSÉ DE L'INVENTION**

L'invention a pour objectif de proposer un dispositif de modulation ou de commutation d'un signal optique de type anneau résonnant qui présente une faible sensibilité thermique sans système actif de rétroaction, qui soit compatible avec un processus de fabrication standard et dont les pertes optiques sont limitées.

A cet effet, l'invention propose un dispositif de modulation ou de commutation d'un signal optique comprenant un premier guide d'onde en anneau formé en un premier matériau dans lequel est réalisée au moins une jonction p-n ou p-i-n. Le premier guide d'onde en anneau est un réseau sub-longueur d'onde. Le dispositif comprend un second guide d'onde en anneau, le premier et le second guide d'onde sont superposés, avec ou non un espace entre eux. Le second guide d'onde en anneau est formé en un second matériau qui présente un coefficient thermo-optique inférieur au coefficient thermo-optique du premier matériau.

Certains aspects préférés mais non limitatifs de ce dispositif sont les suivants :

- le premier et le second guide d'onde en anneau sont espacés l'un de l'autre ;
- le premier guide d'onde en anneau est un guide à nervure et le second guide d'onde en anneau est un guide en bande ;
- l'au moins une jonction p-n ou p-i-n est une jonction parallèle à la direction de propagation de la lumière dans le premier guide d'onde en anneau ;

- l'au moins une jonction p-n ou p-i-n comprend une pluralité de jonctions p-n ou pi-n agencées orthogonalement à la direction de propagation de la lumière dans le premier guide d'onde en anneau ;
- le coefficient thermo-optique du second matériau est au moins cinq fois plus petit que le coefficient thermo-optique du premier matériau ;
- le premier matériau est du silicium et le second matériau est du nitrure de silicium ;
- le réseau sub-longueur d'onde présente le long de la circonférence du premier guide d'onde en anneau un ensemble de fentes radiales, le premier guide d'onde en anneau ayant au niveau des fentes une épaisseur résiduelle comprise entre 50nm et 100nm ;
- il comprend en outre un premier et un deuxième guide d'onde de bus optiquement couplés au premier guide d'onde en anneau, le premier guide d'onde de bus comportant un port d'entrée pour recevoir le signal optique à moduler ou commuter et un premier port de sortie, le deuxième guide d'onde de bus comportant un deuxième port de sortie, chacun des premier et deuxième guides d'onde de bus étant formés en le second matériau.

**BRÈVE DESCRIPTION DES DESSINS**

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

- la figure 1 est une vue schématique d'un dispositif conforme à l'invention ;
- la figure 2 est une vue en coupe radiale des premier et deuxième guide d'onde en anneau du dispositif selon l'invention ;
- la figure 3 est une vue de côté des premier et deuxième guide d'onde en anneau du dispositif selon l'invention, sur une portion de leur circonférence ;
- la figure 4 illustre la répartition du mode optique entre les deux guides d'onde en anneau du dispositif selon l'invention.

**EXPOSÉ DÉTAILLÉ DE MODES DE RÉALISATION PARTICULIERS**

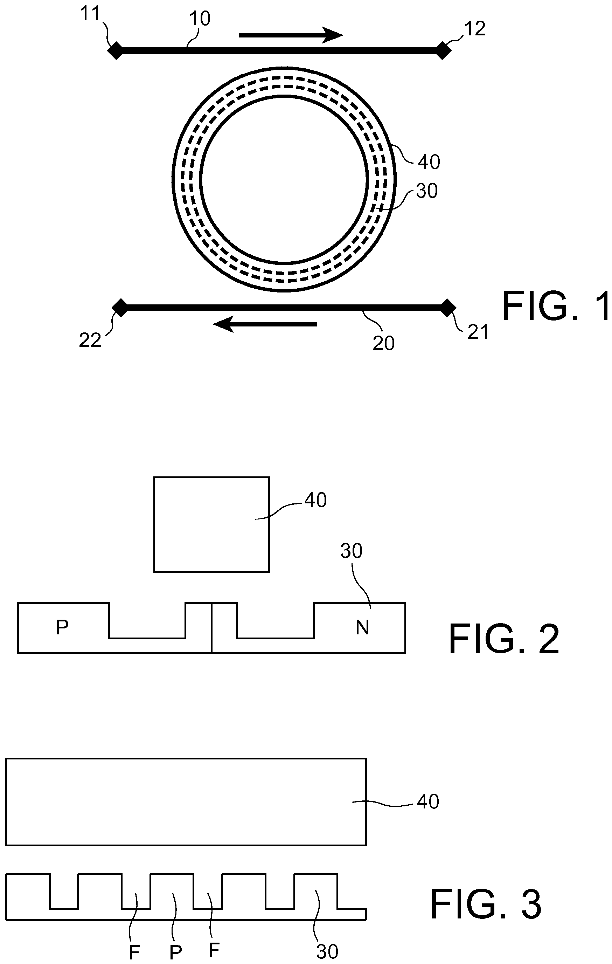

En référence à la figure 1, l'invention porte sur un dispositif de modulation ou de commutation d'un signal optique qui comprend un premier et un deuxième guide d'onde de bus 10, 20 optiquement couplés à un premier guide d'onde en anneau 30.

Le premier guide d'onde de bus 10 comporte un port d'entrée 11, communément désigné par port « In », pour recevoir le signal optique à moduler ou à commuter et un port de sortie 12, communément désigné par port « Through ». Le deuxième guide d'onde de bus 20 comporte un port d'entrée 21, communément désigné par port « Add », et un port de sortie 22, communément désigné par port « Drop ».

Le premier guide d'onde en anneau 30 présente par exemple un rayon de $40 \mu m$. On cherche de préférence à avoir un rayon le plus important possible pour augmenter le facteur de qualité du dispositif et son efficacité de modulation/commutation. Mais *a contrario,* ce rayon est limité de par la fréquence maximale de modulation/commutation souhaitée. L'invention pourra à cet égard trouver avantageusement application pour réaliser des commutateurs pour lesquels la fréquence de commutation doit être inférieure à 1GHz, voire à quelques centaines de MHz.

Le premier guide d'onde en anneau 30 est formé en un premier matériau dans lequel est réalisée, typiquement par dopage, au moins une jonction p-n ou p-i-n. En faisant varier le potentiel électrique aux bornes de cette jonction, on crée une variation de la concentration des porteurs dans la cavité résonante ce qui engendre une translation de sa résonance dans le spectre optique. Le premier matériau est typiquement du silicium. Le premier matériau peut également être du germanium ou un matériau III-V.

Dans le cadre d'une application de commutation, la variation du potentiel électrique aux bornes de la jonction permet de faire passer l'anneau résonnant :

- d'un état « ON » où il est résonant à la longueur d'onde du signal optique reçu au port « In » 11 et permet de faire passer ce signal du premier guide de bus 10 au deuxième guide de bus 20 où on le retrouve sur le port de sortie « Drop » 22 ;
- à un état « OFF » où sa fréquence de résonance n'est plus accordée avec la longueur d'onde du signal optique reçu au port « In » 11, le signal optique restant dans le même guide de bus 10 de sorte qu'on le retrouve sur le port de sortie « Through » 12.

Le cas de la modulation est plus générique et implique que le signal disponible sur le port de sortie « Drop » 22 soit ajusté à différents niveaux intermédiaires entre « ON » et « OFF », la puissance optique du signal à moduler étant pour cela partiellement commutée entre les ports de sortie « Through » et « Drop ».

Dans le cadre de l'invention, le dispositif de modulation/commutation comporte un second guide d'onde en anneau 40 agencé axialement en regard du premier guide d'onde en anneau 30. Le premier et le second guide d'onde en anneau se font ainsi face, i.e. ils sont agencés en vis-à-vis l'un de l'autre. Le premier et le second guide d'onde sont ainsi superposés, avec ou non un espace entre eux.

On a représenté sur la figure 2 une vue selon une coupe radiale de ces guides d'onde en anneau, et sur la figure 3 une vue de côté d'une portion de la circonférence de ces guides d'onde en anneau.

Sur ces figures, les deux guides d'onde en anneau 30, 40 sont espacés l'un de l'autre, par exemple d'une distance de 200nm. La distance séparant les deux guides d'onde en anneau 30, 40 doit rester suffisamment faible pour assurer un couplage optique entre les deux guides d'onde en anneau. Cette distance est d'une manière générale inférieure à 400nm, et dans un mode de réalisation possible les deux guides d'onde en anneau peuvent même être accolés l'un à l'autre. Dans un empilement photonique, le second guide d'onde en anneau peut être au-dessus ou en-dessous du premier guide d'onde en anneau.

Les dimensions du second guide d'onde en anneau 40 sont choisies de manière à garantir un fonctionnement monomode à la longueur d'onde de travail, par exemple à 1310nm. Le second guide d'onde en anneau 40 peut être un guide en bande (guide *strip*) ayant par exemple une largeur (transversalement à la direction de propagation de la lumière) de 700nm et une hauteur de 600nm.

Le premier guide d'onde en anneau 30 peut être un guide à nervure (guide *rib*) qui présente par exemple une partie centrale de 250 nm de large issue d'une gravure de 250nm de profondeur dans un guide de 300nm de hauteur.

Sur la figure 2, le premier guide d'onde en anneau 30 présente dans sa partie centrale une jonction p-n parallèle à la direction de propagation de la lumière dans le premier guide d'onde en anneau. Cette jonction est latérale sur la figure 2, mais l'invention s'étend également à une jonction verticale. De la même manière, il peut s'agir d'une jonction p-i-n.

Dans un mode de réalisation alternatif, le premier guide d'onde en anneau peut présenter une pluralité de jonctions p-n ou p-i-n agencées orthogonalement à la direction de propagation de la lumière dans le premier guide d'onde en anneau. Dans ce mode de réalisation, on retrouve ainsi des régions p et n interdigitées le long de la circonférence du premier guide d'onde en anneau.

Le second guide d'onde en anneau 40 est formé en un second matériau qui présente un coefficient thermo-optique inférieur au coefficient thermo-optique du premier matériau du premier guide d'onde en anneau 30. Le second matériau peut être du SiN, du SinO, de l'AlN ou encore être un matériau polymère tel que du PMMA (polyméthacrylate de méthyle). On choisit de préférence des matériaux tels que le coefficient thermo-optique du second matériau est au moins cinq fois plus petit que le coefficient thermo-optique du premier matériau. A titre d'exemple, le coefficient thermo-optique d'un nitrure de silicium peut être de $2.10^{-5}K^{-1}$ là où le coefficient thermo-optique du silicium est de $2.10^{-4}K^{-1}$, soit jusqu'à dix fois moins selon les conditions de dépôt.

L'invention propose ainsi d'introduire dans un empilement d'une plateforme photonique une couche supplémentaire en un second matériau moins sensible à la température que le matériau du premier guide d'onde en anneau. Ce second matériau permet de diminuer la sensibilité thermique du dispositif de modulation/commutation de sorte qu'il peut fonctionner sans système actif de rétroaction, à tout le moins pour des variations faibles de température. Les guides d'onde de bus 10, 20 peuvent être réalisés en le second matériau, et être ainsi agencées dans la couche de l'empilement où l'on retrouve le second guide d'onde en anneau. Alternativement, ils peuvent être réalisés en le premier matériau, et être ainsi agencées dans la couche de l'empilement où l'on retrouve le premier guide d'onde en anneau. Dans une réalisation alternative, les guides d'onde de bus peuvent être agencés dans une troisième couche.

L'invention propose donc d'avoir recours à deux couches de matériaux différents pour former les deux guides d'onde en anneau en regard l'un de l'autre, l'un (le premier) assurant la fonction active de modulation/commutation et l'autre (le second) améliorant les propriétés passives de l'anneau. Pour cela le signal optique doit présenter un mode optique réparti sur les deux guides d'onde en anneau 30, 40.

Or le second matériau présente un indice généralement beaucoup plus faible que le premier matériau de sorte qu'il est difficile d'obtenir un mode couplé dont la puissance optique serait répartie sur les deux guides d'onde en anneau. A titre d'exemple, pour une longueur d'onde de 1310nm, l'indice du Si est de 3.5 là où l'indice du SiN est de 1.9.

Pour résoudre ce problème, et comme cela est visible sur la figure 3, l'invention propose que le premier guide d'onde en anneau 30 forme un réseau sub-longueur d'onde. De telle manière son indice effectif se rapproche de celui du second guide d'onde en anneau 40. Par sub-longueur d'onde, on entend que le pas du réseau est inférieur à $\lambda/2n$ pour éviter tout effet de diffraction, avec n l'indice effectif du mode couplé. Pour un fonctionnement à 1310nm, la période du réseau sub-longueur d'onde peut être de 350nm.

La réduction de la largeur du premier guide d'onde en anneau permet également de répondre à ce problème, étant entendu que cette largeur ne peut être trop faible au risque de rendre l'alignement des dopages p et n difficilement contrôlable (ce serait par exemple le cas avec une largeur de 150nm).

Le premier guide d'onde en anneau présente donc le long de sa circonférence un ensemble de fentes radiales F agencées périodiquement, deux fentes successives étant séparées par un plot P du premier matériau. L'épaisseur résiduelle du premier guide d'onde en anneau au niveau des fentes F est de préférence comprise entre 50nm (au-dessous, la résistance électrique d'accès peut être trop élevée) et 100nm (au-dessus, une propagation de modes d'un guide en plaque est susceptible de se produire).

La largeur des plots P (dans le sens de propagation de la lumière) est choisie au vu des limites sur le pas du réseau et sur les possibilités de fabrication pour ajuster l'indice effectif du premier guide d'onde en anneau, ce qui va contrôler la répartition du mode optique entre le premier guide d'onde en anneau 30 et le second guide d'onde en anneau 40. La répartition de lumière entre les deux guides d'onde en anneau est donc essentiellement réglée en ajustant la largeur du premier guide d'onde en anneau (transversalement à la direction de propagation de la lumière) et la largeur des plots (selon la direction de propagation de la lumière).

Un compromis doit être trouvé entre un mode principalement dans le second guide d'onde en anneau 40, donc très peu sensible à la température mais avec une modulation/commutation peu efficace et un mode principalement dans le premier guide d'onde en anneau 30, donc avec une modulation/commutation efficace mais sensible à la température.

Le premier guide d'onde en anneau 30 est un dispositif résonant présentant de bons facteurs de qualité et donc pour lequel la modulation/commutation est particulièrement efficace. En outre, l'efficacité de modulation/commutation peut aussi être améliorée en augmentant l'amplitude du signal électrique de commande de la modulation/commutation. Il est donc possible de favoriser un mode optique principalement dans le second guide d'onde en anneau (pour favoriser l'insensibilité thermique) sans affecter l'efficacité de modulation/commutation. Ainsi, dans un mode de réalisation possible, la répartition de la lumière entre les guides d'onde en anneau est telle que 5% à 10% du signal optique est confiné dans le premier guide d'onde en anneau.

Ainsi, l'intensité du mode couplé se propageant dans les deux guides d'onde en anneau est dans une large part confinée dans le second guide d'onde en anneau. Le second matériau ayant un indice faible, la rugosité des parois a moins d'importance et le facteur de qualité de l'ensemble s'en trouve augmentée. Les pertes induites par le dopage du premier matériau sont aussi diminuées. Le caractère sub-lambda de la structuration du premier guide d'onde en anneau ne dégrade pas le facteur de qualité. Le facteur de qualité étant important, la résonnance est plus fine. Il est donc possible de faire basculer le modulateur/commutateur avec un taux de recouvrement du mode par le premier matériau relativement faible.

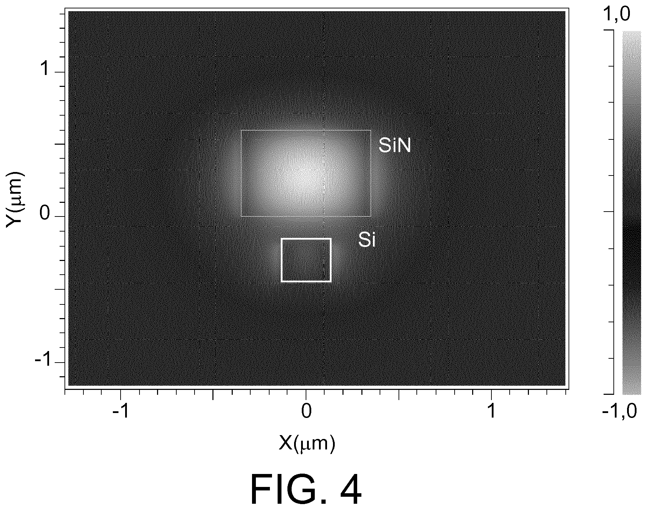

On a représenté sur la figure 4 une simulation de la répartition du mode optique entre les deux guides d'onde en anneau du dispositif selon l'invention. Le premier guide d'onde en anneau est ici un anneau de Si, le second guide d'onde en anneau est un anneau de SiN, ces guides d'ondes en anneau sont encapsulées dans une gaine en SiO$_2$ et leurs dimensions sont celles exemplifiées précédemment. Dans cet exemple de mise en œuvre, seuls 7% de la lumière se retrouve confinée dans le premier anneau en silicium et l'indice effectif du mode couplé est de 1,64. A titre de comparaison, en l'absence de la mise en oeuvre de l'invention, dans le cas d'un seul anneau de silicium, 80% de la lumière y reste confinée.

La sensibilité à la température de l'indice effectif du mode couplé est donnée par la formule suivante :

$$\frac{dn_{eff}}{dT} = \gamma_{Si} \frac{dn_{Si}}{dt} + \gamma_{SiN} \frac{dn_{SiN}}{dt} + \gamma_{SiO2} \frac{dn_{SiO2}}{dt},$$

avec les facteurs de confinement $\gamma_{si}$ = 0.07, $\gamma_{SiN}$ = 0.57 et $\gamma_{SiO2}$ = 0.36 et les coefficients thermo-optique

$$\frac{dn_{Si}}{dt} = 2 \times 10^{-4} K^{-1}, \quad \frac{dn_{SiN}}{dt} = 2 \times 10^{-5} K^{-1}$$

$$\frac{dn_{SiO2}}{dt} = 1 \times 10^{-5} K^{-1}.$$

, et

Ainsi, là où la sensibilité thermique dans le cas du seul anneau de silicium est de 1,62 x 10$^{-4}$$K^{-1}$, elle n'est plus que de 0,29 $\times$ 10$^{-4}$$K^{-1}$ pour l'exemple de réalisation de l'invention soit près de 6 fois moins.

Un raisonnement similaire permet d'estimer les pertes optiques qui ont principalement lieu dans le premier guide d'onde de Si dopé. La simulation de mode permet d'accéder à l'indice imaginaire effectif du mode couplé k = 3 $\times$ 10$^{-6}$ soit un gain d'un facteur 10 par rapport au cas du seul anneau de silicium. On relèvera que cette estimation ne prend en compte que l'effet des pertes associées au dopage dans le guide en Si, et qu'un gain encore plus important est attendu du fait de la moindre sensibilité à la rugosité dans le guide SiN

## Revendications

1. Dispositif de modulation ou de commutation d'un signal optique comprenant un premier guide d'onde en anneau (30) formé en un premier matériau dans lequel est réalisée au moins une jonction p-n ou p-i-n, comprenant un second guide d'onde en anneau (40),
**caractérisé en ce que** le second guide d'onde en anneau (40) est formé en un second matériau qui présente un coefficient thermo-optique inférieur au coefficient thermo-optique du premier matériau, **en ce que** le premier guide d'onde en anneau (40) est un réseau sub-longueur d'onde et **en ce que** le premier et le second guide d'onde sont superposés, avec ou non un espace entre eux.

2. Dispositif selon la revendication 1, dans lequel le premier et le second guide d'onde en anneau sont espacés l'un de l'autre.

3. Dispositif selon l'une des revendications 1 et 2, dans lequel le premier guide d'onde en anneau (30) est un guide à nervure et le second guide d'onde en anneau (40) est un guide en bande.

4. Dispositif selon l'une des revendications 1 à 3, dans lequel l'au moins une jonction p-n ou p-i-n est une jonction parallèle à la direction de propagation de la lumière dans le premier guide d'onde en anneau.

**5.** Dispositif selon l'une des revendications 1 à 3, dans lequel l'au moins une jonction p-n ou p-i-n comprend une pluralité de jonctions p-n ou p-i-n agencées orthogonalement à la direction de propagation de la lumière dans le premier guide d'onde en anneau.

**6.** Dispositif selon l'une des revendications 1 à 5, dans lequel le coefficient thermo-optique du second matériau est au moins cinq fois plus petit que le coefficient thermo-optique du premier matériau.

**7.** Dispositif selon la revendication 6, dans lequel le premier matériau est du silicium et le second matériau est du nitrure de silicium.

**8.** Dispositif selon l'une des revendications 1 à 7, dans lequel le réseau sub-longueur d'onde présente le long de la circonférence du premier guide d'onde en anneau un ensemble de fentes radiales (F), le premier guide d'onde en anneau ayant au niveau des fentes une épaisseur résiduelle comprise entre 50nm et 100nm.

**9.** Dispositif selon l'une des revendications 1 à 8, comprenant en outre un premier (10) et un deuxième (20) guide d'onde de bus optiquement couplés au premier guide d'onde en anneau (30), le premier guide d'onde de bus (10) comportant un port d'entrée (11) pour recevoir le signal optique à moduler ou commuter et un premier port de sortie (12), le deuxième guide d'onde de bus (20) comportant un deuxième port de sortie (22), chacun des premier et deuxième guides d'onde de bus étant formés en le second matériau.

## Patentansprüche

**1.** Vorrichtung zum Modulieren bzw. Schalten eines optischen Signals, enthaltend einen ersten Ringwellenleiter (30) aus einem ersten Material, in dem mindestens ein p-n- oder p-i-n-Übergang ausgebildet ist, und einen zweiten Ringwellenleiter (40), **dadurch gekennzeichnet, dass** der zweite Ringwellenleiter (40) aus einem zweiten Material gebildet ist, das einen thermooptischen Koeffizienten aufweist, der niedriger ist als der thermooptische Koeffizient des ersten Materials, dass der erste Ringwellenleiter (40) ein Subwellenlängengitter ist und dass der erste und der zweite Wellenleiter mit oder ohne Zwischenraum übereinander angeordnet sind.

**2.** Vorrichtung nach Anspruch 1, wobei der erste und der zweite Ringwellenleiter voneinander beabstandet sind.

**3.** Vorrichtung nach einem der Ansprüche 1 und 2, wobei der erste Ringwellenleiter (30) ein Rippenleiter und der zweite Ringwellenleiter (40) ein Streifenleiter ist.

**4.** Vorrichtung nach einem der Ansprüche 1 bis 3, wobei der mindestens eine p-n- oder p-i-n-Übergang ein Übergang ist, der parallel zur Lichtausbreitungsrichtung in dem ersten Ringwellenleiter verläuft.

**5.** Vorrichtung nach einem der Ansprüche 1 bis 3, wobei der mindestens eine p-n- oder p-i-n-Übergang eine Vielzahl von p-n- oder p-i-n-Übergängen umfasst, die orthogonal zur Lichtausbreitungsrichtung in dem ersten Ringwellenleiter angeordnet sind.

**6.** Vorrichtung nach einem der Ansprüche 1 bis 5, wobei der thermooptische Koeffizient des zweiten Materials mindestens fünfmal kleiner ist als der thermooptische Koeffizient des ersten Materials.

**7.** Vorrichtung nach Anspruch 6, wobei das erste Material Silizium und das zweite Material Siliziumnitrid ist.

**8.** Vorrichtung nach einem der Ansprüche 1 bis 7, wobei das Subwellenlängengitter entlang des Umfangs des ersten Ringwellenleiters eine Anordnung von radialen Schlitzen (F) aufweist, wobei der erste Ringwellenleiter im Bereich der Schlitze eine Restdicke zwischen 50 nm und 100 nm aufweist.

**9.** Vorrichtung nach einem der Ansprüche 1 bis 8, ferner enthaltend einen ersten (10) und einen zweiten (20) Bus-Wellenleiter umfasst, die optisch mit dem ersten Ringwellenleiter (30) gekoppelt sind, wobei der erste Bus-Wellenleiter (10) einen Eingangsanschluss (11) zum Empfangen des zu modulierenden oder zu schaltenden optischen Signals und einen ersten Ausgangsanschluss (12) aufweist und wobei der zweite Bus-Wellenleiter (20) einen zweiten Ausgangsanschluss (22) aufweist, wobei der erste und der zweite Bus-Wellenleiter jeweils aus dem zweiten Material gebildet sind.

## Claims

**1.** A device for modulating or switching an optical signal, comprising a first ring waveguide (30) made of a first material wherein at least one p-n or p-i-n junction is formed, comprising a second ring waveguide (40), **characterised in that** the second ring waveguide (40) is made of a second material that has a thermo-optic coefficient less than the thermo-optic coefficient of the first material, **in that** the first ring waveguide (30) is a sub-wavelength network, and **in that** the first and second waveguides are superimposed, with or without a gap between them.

**2.** The device according to claim 1, wherein the first and second ring waveguides are spaced apart from one another.

**3.** The device according to claim 1 or 2, wherein the first ring waveguide (30) is a rib guide and the second ring waveguide (40) is a strip guide.

**4.** The device according to any one of claims 1 to 3, wherein the at least one p-n or p-i-n junction is a junction parallel to a light propagation direction in the first ring waveguide.

**5.** The device according to any one of claims 1 to 3, wherein the at least one p-n or p-i-n junction comprises a plurality of p-n or p-i-n junctions arranged orthogonally to a light propagation direction in the first ring waveguide.

**6.** The device according to any one of claims 1 to 5, wherein the thermo-optic coefficient of the second material is at least five times smaller than the thermo-optic coefficient of the first material.

**7.** The device according to claim 6, wherein the first material is silicon and the second material is silicon nitride.

**8.** The device according to any one of claims 1 to 7, wherein the sub-wavelength network has along the circumference of the first ring waveguide a set of radial slots (F), the first ring waveguide having at the slots a residual thickness between 50 nm and 100 nm.

**9.** The device according to any one of claims 1 to 8, further comprising a first (10) and a second (20) bus waveguide optically coupled to the first ring waveguide (30), the first bus waveguide (10) including an input port (11) for receiving the optical signal to be modulated or switched and a first output port (12), the second bus waveguide (20) including a second output port (22), each of the first and second bus waveguides being made of the second material.

FIG. 1

FIG. 2

FIG. 3

FIG. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20140321848 A1

**Littérature non-brevet citée dans la description**

- **PADMARAJU et al.** Integrated thermal stabilization of a microring modulator. *Opt. Exp,* 2013

- **GUHA et al.** Athermal silicon microring resonators with titanium oxide cladding. *Opt. Exp.,* 2013